# EUROPEAN PATENT APPLICATION

(11) **EP 3 133 541 A1**
(43) Date of publication of application: **22.02.2017**
(21) Application number: 16169276.9
(22) Date of filing: 12.05.2016
(51) Int. Cl.: G06Q 10/06, B62M 25/00

(54) **METHOD AND DEVICE FOR PROMPTING GEAR SHIFTING OF BICYCLE**

(30) Priority: 19.08.2015 CN 201510512988
(71) Applicant: Xiaomi Inc., Beijing 100085 (CN)
(72) Inventor: ZHANG, Rui, Beijing 100085 (CN)
(74) Representative: Delumeau, François Guy

(57) **Abstract**

The present invention provides a method for prompting gear shifting of a bicycle. The method includes: collecting (101) cycling data of a user during a cycling process; comparing (102) the collected cycling data with cycling data samples in a preset gear shifting strategy library, wherein the gear shifting strategy library includes corresponding relationships between preset gear shifting strategies and cycling data samples; and when the collected cycling data matches a cycling data sample in the gear shifting strategy library, outputting (103) the gear shifting strategy corresponding to the cycling data sample to the user, to prompt the user to perform a gear shifting operation based on the gear shifting strategy. The present invention achieves that non-professional cycling users may also accomplish correct gear shifting operations in different cycling environments under the prompt of the output gear shifting strategy.

## Description

### TECHNICAL FIELD

The present invention generally relates to the technical field of bicycles, and more particularly, to a method and a device for prompting gear shifting of a bicycle.

### BACKGROUND

A bicycle, especially a sport bicycle (for example, a mountain bicycle, a road bicycle and the like), usually has a complex speed change system. There are a plurality of large and small gear wheel disks at the front and at the back respectively, which may achieve possibility of a plurality of gear shifting match combinations, to deal with requirements of different road conditions. Because, for a structure of a speed change suite, each gear wheel disk corresponds to a separate speed change control rod, gear shifting and speed change operations must be actively accomplished manually by the user, which brings complexity into the actual operations and control, and non-professional cycling users find it hard to accomplish gear shifting operations on their own.

### SUMMARY

In order to solve the problem existing in the related art, the present invention provides a method and a device for prompting gear shifting of a bicycle.

According to a first aspect of embodiments of the present invention, there is provided a method for prompting gear shifting of a bicycle, applied in a mobile terminal, including:
collecting cycling data of a user during a cycling process;
comparing the collected cycling data with cycling data samples in a preset gear shifting strategy library, wherein the gear shifting strategy library includes corresponding relationships between preset gear shifting strategies and cycling data samples; and
when the collected cycling data matches a cycling data sample in the gear shifting strategy library, outputting the gear shifting strategy corresponding to the cycling data sample to the user, to prompt the user to perform a gear shifting operation based on the gear shifting strategy.

For example, the cycling data may include any one or any combination of a cycling track (i.e. path or trajectory), road condition information and a cycling speed, wherein the cycling track includes a GPS motion track, and altitude changing data, gradient changing data corresponding to the GPS motion track.

For example, when the collected cycling data matches a cycling data sample in the gear shifting strategy library, outputting the gear shifting strategy corresponding to the cycling data sample to the user may include:
when the collected cycling data completely matches one of the cycling data samples in the gear shifting strategy library, outputting the gear shifting strategy corresponding to the cycling data sample to the user; and
when the collected cycling data does not completely match any one of the cycling data samples in the gear shifting strategy library, calculating a similarity between the collected cycling data and the cycling data sample in the gear shifting strategy library, and outputting the gear shifting strategy corresponding to the cycling data sample with a calculated highest similarity to the user.

For example, the method may further include:
reading gear shifting operation data of a preset user, wherein the gear shifting operation data includes an occurring time of the gear shifting operation and a gear shifting result after the gear shifting operation;
reading cycling data of the preset user collected at the occurring time of the gear shifting operation as a cycling data sample; and
generating a corresponding gear shifting strategy according to the read gear shifting operation data and the cycling data sample, and creating the gear shifting strategy library based on the generated gear shifting strategy and the cycling data sample.

For example, the method may further include:
before generating the corresponding gear shifting strategy according to the read gear shifting operation data and the cycling data sample, deleting an abnormal gear shifting result in the gear shifting operation data.
For example, the cycling data may further include gear shifting adjusting data; the gear shifting adjusting data includes physiological state data, cycling environment data or gradient track data; and
the method may further include:
   outputting an adjusting strategy with respect to the gear shifting strategy to the user based on the collected gear shifting adjusting data.

According to a second aspect of embodiments of the present invention, there is provided a device for prompting gear shifting of a bicycle, including:
a collecting module configured to collect cycling data of a user during cycling;
a comparing module configured to compare the collected cycling data with cycling data samples in a preset gear shifting strategy library, wherein the gear shifting strategy library includes corresponding relationships between preset gear shifting strategies and cycling data samples; and
a first outputting module configured to, when the collected cycling data matches a cycling data sample in the gear shifting strategy library, output the gear shifting strategy corresponding to the cycling data sample to the user, to prompt the user to perform a gear shifting operation based on the gear shifting strategy.

For example, the cycling data may include any one or any combination of a cycling track, road condition information and a cycling speed, wherein the cycling track may include a GPS motion track, and altitude changing data, gradient changing data corresponding to the GPS motion track.

For example, the first outputting module may include:
a first outputting sub-module configured to, when the collected cycling data completely matches one of the cycling data samples in the gear shifting strategy library, output the gear shifting strategy corresponding to the cycling data sample to the user;
a second outputting sub-module configured to, when the collected cycling data does not completely match any one of the cycling data samples in the gear shifting strategy library, calculate a similarity between the collected cycling data and the cycling data sample in the gear shifting strategy library, and output the gear shifting strategy corresponding to the cycling data sample with a calculated highest similarity to the user.

For example, the device may further include:
a first reading module configured to read gear shifting operation data of a preset user, wherein the gear shifting operation data includes an occurring time of the gear shifting operation and a gear shifting result after the gear shifting operation;
a second reading module configured to read cycling data of the preset user collected at the occurring time of the gear shifting operation as a cycling data sample; and
a creating module configured to generate a corresponding gear shifting strategy according to the read gear shifting operation data and the cycling data sample, and create the gear shifting strategy library based on the generated gear shifting strategy and the cycling data sample.

For example, the device may further include:
a deleting module configured to, before generating the corresponding gear shifting strategy according to the read gear shifting operation data and the cycling data sample, delete an abnormal gear shifting result in the gear shifting operation data.
For example, the cycling data may further include gear shifting adjusting data; the gear shifting adjusting data includes physiological state data, cycling environment data or gradient track data; and
the device may further include:
   a second outputting module configured to output an adjusting strategy with respect to the gear shifting strategy to the user based on the collected gear shifting adjusting data.

According to a third aspect of embodiments of the present invention, there is provided a device for prompting gear shifting of a bicycle, including:
a processor; and
a memory for storing instructions executable by the processor;
wherein the processor is configured to perform:
   collecting cycling data of a user during a cycling process;
   comparing the collected cycling data with cycling data samples in a preset gear shifting strategy library, wherein the gear shifting strategy library includes corresponding relationships between preset gear shifting strategies and cycling data samples; and
   when the collected cycling data matches a cycling data sample in the gear shifting strategy library, outputting the gear shifting strategy corresponding to the cycling data sample to the user, to prompt the user to perform a gear shifting operation based on the gear shifting strategy

According to a fourth aspect of the present invention, there is provided a computer program, which, when executing on a processor of a mobile terminal for prompting gear shifting of a bicycle, performs a method according to the first aspect of the present invention.

The technical scheme according to embodiments of the present invention may have the following beneficial effects.

In the above embodiments of the present invention, cycling data of a user during a cycling process is collected; the collected cycling data is compared with a cycling data sample in a preset gear shifting strategy library, wherein the gear shifting strategy library includes corresponding relationships between preset gear shifting strategies and cycling data samples; and when the collected cycling data matches a cycling data sample in the gear shifting strategy library, the gear shifting strategy corresponding to the cycling data sample is output to the user, to prompt the user to perform a gear shifting operation based on the gear shifting strategy. Therefore, it achieves that non-professional cycling users may also accomplish correct gear shifting operations in different cycling environments under the prompt of the output gear shifting strategy.

It is to be understood that both the foregoing general description and the following detailed description of certain example embodiments are illustrative and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for prompting gear shifting of a bicycle according to an embodiment;
Fig. 2 is a flow chart illustrating a method for prompting gear shifting of a bicycle according to another embodiment;
Fig. 3 is a block diagram of a device for prompting gear shifting of a bicycle according to an embodiment;
Fig. 4 is a block diagram of a device for prompting gear shifting of a bicycle according to another embodiment;
Fig. 5 is a block diagram of a device for prompting gear shifting of a bicycle according to another embodiment;
Fig. 6 is a block diagram of a device for prompting gear shifting of a bicycle according to another embodiment;
Fig. 7 is a block diagram of a device for prompting gear shifting of a bicycle according to another embodiment; and
Fig. 8 is a block diagram of a device for prompting gear shifting of a bicycle according to an embodiment.

### DETAILED DESCRIPTION

Reference will now be made in detail to certain embodiments, examples of which are illustrated in the accompanying drawings. The following description refers to the accompanying drawings in which the same numbers in different drawings represent the same or similar elements unless otherwise represented. The implementations set forth in the following description of certain embodiments do not represent all implementations consistent with the invention. Instead, they are merely examples of apparatuses and methods consistent with aspects related to the invention as recited in the appended claims.

The terms used herein are merely for describing a particular embodiment, rather than limiting the present invention. As used in the present disclosure and the appended claims, terms in singular form such as "a", "said" and "the" are intended to also include plural forms, unless explicitly dictated otherwise. It should also be understood that the term "and / or" used herein means any one or any possible combination of one or more associated listed items.

It should be understood that, although an element may be described using a term "first", "second", or "third", etc., the element is not limited by these terms. These terms are merely for distinguishing among elements of the same kind. For example, without departing from the scope of the present invention, a first element can also be referred to as a second element. Similarly, a second element can also be referred to as a first element. Depending on the context, a term "if" as used herein can be interpreted as "when", "where" or "in response to".

In the related art, a bicycle, especially a sport bicycle, usually has a complex speed change system. There are a plurality of large and small gear wheel disks at the front and at the back respectively, which may achieve possibility of a plurality of gear shifting match combinations, to deal with requirements of different road conditions. Because, for a structure of a speed change suite, each gear wheel disk corresponds to a separate speed change control rod, gear shifting and speed change operations must be actively accomplished manually by a user, which brings complexity into the actual operations and control.

Professional cyclists may master gear shifting and speed change operation skills more accurately after large quantities of professional training. When encountering different road conditions, they may shift the large and small gear wheel disks at the front and at the back to proper gears more appropriately. However, for ordinary users having no professional training or corresponding experience, when riding a bicycle with a speed change system, they may usually be confused when facing the complex speed change system, which may lead to shifting to a wrong gear or not shifting a gear in time. Unreasonable speed changes may not only disturb cycling rhythm, excessively consume physical strength, increase the burden on the knee, but also aggravate mechanical excessive wear, and it may further lead the user to miss his/her step to cause danger.

For the above reasons, the present invention provides a method for prompting gear shifting of a bicycle, including: collecting cycling data of a user during a cycling process; comparing the collected cycling data with cycling data samples in a preset gear shifting strategy library, wherein the gear shifting strategy library includes corresponding relationships between preset gear shifting strategies and the cycling data samples; and when the collected cycling data matches a cycling data sample in the gear shifting strategy library, outputting the gear shifting strategy corresponding to the cycling data sample to the user, to prompt the user to perform a gear shifting operation based on the gear shifting strategy. Therefore, it achieves that non-professional bicycle users may also accomplish correct gear shifting operations in different cycling environments under the prompting of the output gear shifting strategy.

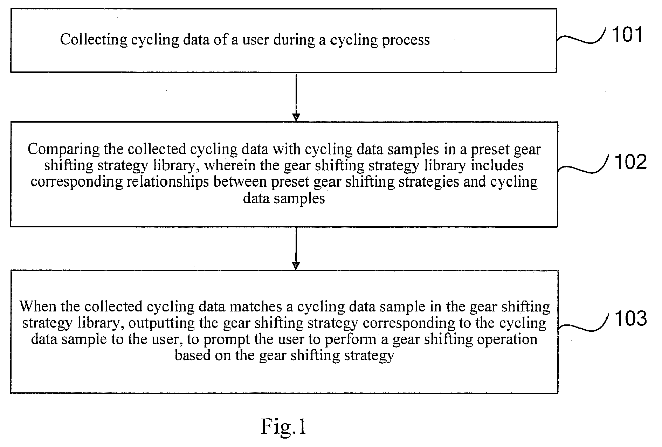

As shown in Fig. 1, Fig. 1 is a flow chart illustrating a method for prompting gear shifting of a bicycle according to an embodiment, which is applied in a terminal, including the following steps.

In step 101, cycling data of a user during a cycling process is collected.

In step 102, the collected cycling data is compared with one or more cycling data samples in a preset gear shifting strategy library, wherein the gear shifting strategy library includes corresponding relationships between preset gear shifting strategies and cycling data samples.

In step 103, when the collected cycling data matches a cycling data sample in the gear shifting strategy library, the gear shifting strategy corresponding to the cycling data sample is output to the user, to prompt the user to perform a gear shifting operation based on the gear shifting strategy.

Wherein the technical solution recorded in the above steps 101∼103 may be understood as a gear shifting prompt logic loaded in a preset APP, or software application, (for example, a cycling APP) installed in the above terminal. The APP may provide a gear-shifting prompt service for the user by operating the above gear shifting prompt logic.

The above terminal may be a mobile terminal of the user. For example, the mobile terminal may be a smartphone of the user. Furthermore, the above terminal may also be a preset vehicle-carried terminal in a structure of the bicycle besides the mobile terminal of the user. For example, the above terminal may also be a smart terminal or a smart module installed on the bicycle.

The above bicycle may be a bicycle having a speed change system (gears). The above bicycle may further install an electronic gear-switching system in advance besides having the speed change system. The operating principle of the electronic gear-switching system is the same as that of a traditional gear-switching system, but the electronic gear-switching system may ensure accuracy of the user operation, and may accurately record the gear shifting operations of the user. Meanwhile, the electronic gear-switching system may provide an interface for the user. The above APP installed on the mobile terminal may read the gear shifting operation data having been recorded by the electronic gear-switching system and output it to the mobile terminal locally through the interface provided by the electronic gear-switching system.

The following takes the above terminal being the mobile terminal of the user as an example for the purposes of illustration.

In the present embodiment, during the cycling process of the user, the carried mobile terminal may collect cycling data of the user in real time. The cycling data may include any one or any combination of a cycling track, road condition information and a cycling speed, etc., during the cycling process of the user. The cycling track may be a three-dimensional trajectory during the cycling process of the user. Besides a GPS motion track, the cycling track may also include altitude changing data and gradient changing data corresponding to the GPS motion track, thus three-dimensionally showing the cycling track of the user to the cycling user.

Wherein when the mobile terminal collects the cycling data of the user, it may be achieved by built-in sensors of the mobile terminal.

When collecting the cycling track data, a built-in GPS sensor may collect GPS position information and altitude height of the user in real time. Then GPS motion track of the user is generated according to the collected GPS position information. The altitude changing data and gradient changing data of the user are generated according to the collected altitude height.

When collecting the road condition information, a built-in G-sensor (gravity sensor) may sense changes of accelerating force during the cycling process of the user (wherein the accelerating force is a force acting on an object during an accelerating process of the object). For example, the G-sensor may convert various movement changes such as shaking, falling off, going up and going down into an electrical signal, so the G-sensor may learn about actual road conditions by the acceleration changes sensed during the cycling process of the user in real time. For example, when the G-sensor senses violently shaking or bumping during the cycling process of the user, the road condition may be a rugged mountain road; when the G-sensor senses that it is smooth and steady during the cycling process of the user, the road condition may be a flat road; and when the G-sensor senses going up or going down during the cycling process of the user, the road condition may be an upslope road or a downslope road.

When collecting the cycling speed, a built-in speed sensor may collect the cycling speed of the user in real time. Furthermore, for the cycling speed of the user, an average cycling speed of the user may be calculated according to a cycling time of the user and a distance change, based on the GPS position change information collected by the GPS sensor.

As for the collected cycling data of the user, the mobile terminal may save it locally. The above APP may read the cycling data having been saved by the mobile terminal in real time.

In the present embodiment, the above APP may further provide a preset gear shifting strategy library. The gear shifting strategy library may include preset gear shifting strategies and corresponding cycling data samples.

Wherein the above gear shifting strategy is a gear shifting operation suggestion during the cycling process of the user. The above gear shifting strategy library may be created by the above APP based on a quantity of cycling data samples and gear shifting operation data.

For example, in order to create the above gear shifting strategy library, a quantity of professional cyclists (preset users) may be asked to carry the mobile terminal installed with the above APP, ride the bicycle set with the electronic speed change suite, and ride a quantity of different roads respectively. During the cycling process, the mobile terminal may collect cycling data of the professional cyclists using a built-in sensor, and the electronic speed change suite of the bicycle may record the gear shifting operations of the professional cyclists at the same time.

The above APP may read the gear shifting operation data of the professional cyclists having been recorded by the electronic speed change suite and output it to the mobile terminal locally by connecting the interface provided by the electronic speed change suite, wherein the gear shifting operation data generally includes an occurring time of the gear shifting operation during the cycling process of the professional cyclist and a corresponding gear shifting result of the gear shifting operation. The gear shifting result is a speed change ratio after the professional cyclist performs the gear shifting operation on the bicycle (the speed change ratio is a gear ratio of a driving gear to the driven gear in the speed change gears of the bicycle, and the user may adjust the speed change ratio by adjusting the speed change control rod corresponding to each gear wheel of the front and rear wheels).

Because professional cyclists have a large quantity of professional training, they may master gear shifting operations and control skills more accurately when riding in different cycling environments. The gear shifting operation data and cycling data generated during the cycling process of the professional cyclist are combined with respect to the same time axis, and it may generally reflect the gear shifting strategy when the professional cyclist rides in different cycling environments. For example, it may reflect how the professional cyclist achieves the most reasonable state of the speed change ratio of the bicycle by the gear shifting operations for different gradients, speeds or roads.

Therefore, after the above APP successfully reads the gear shifting operation data during the cycling process of the professional cyclist through the above interface, it may further read the cycling data (e.g. cycling trajectory, etc.) at the time when the gear shifting operation of the professional cyclist occurs from the cycling data of the professional cyclist collected by the mobile terminal (i.e. read the cycling data of the professional cyclist collected by the mobile terminal when the gear shifting operation of the professional cyclist occurs), and the cycling data being served as the cycling data sample is combined with the gear shifting operation data of the professional cyclist to have a quantification processing, to generate a corresponding gear shifting strategy.

In the present embodiment, invalid gear shifting operations (for example, misoperation or meaningless gear shifting operations performed in the cycling process) may also be generated when the professional cyclists generate gear shifting operation data during the cycling process. Therefore, before the above cycling data sample and the gear shifting operation data of the professional cyclist are combined to have the quantification processing to generate the corresponding gear shifting strategy, the above APP may further perform data correction on the gear shifting result in the gear shifting operation data, to delete abnormal gear shifting results therein.

The above APP may achieve the above-mentioned data correction on the gear shifting result in the gear shifting operation data in different implementations.

For example, the above APP may perform reversing verification on the above gear shifting result based on the above cycling data sample. That is, the APP may acquire the road condition information at the occurring time of the gear shifting operation by analyzing the above cycling data sample, and then reversely judge whether the professional cyclist makes a reasonable gear shifting operation under such a road condition. If it is unreasonable, the gear shifting operation is an abnormal gear shifting operation, and the above APP may delete the gear shifting result corresponding to the gear shifting operation.

For example, the above APP may determine that the professional cyclist is just entering an upslope road when the professional cyclist performs the gear shifting operation, by analyzing the cycling data sample. According to a basic cycling common sense, when the cyclist is entering the upslope road, he/she may usually turn the speed change ratio down, thus saving physical strength. Therefore, if the gear shifting operation result corresponding to the cycling data sample is an operation to turn the speed change ratio up at this time, the gear shifting operation is an unreasonable gear shifting operation. The above APP may regard the gear shifting result corresponding to the gear shifting operation as an abnormal gear shifting result in this instance, and delete it.

It can be seen that, before the above cycling data sample and the gear shifting operation data of the professional cyclist are combined to have the quantification processing to generate the corresponding gear shifting strategy, the above APP may perform data correction on the gear shifting result in the gear shifting operation data, to delete the abnormal gear shifting result therein, which may make the generated gear shifting strategy more proper and reasonable.

In the present embodiment, after the above cycling data sample and the gear shifting operation data of the professional cyclist are combined with respect to the same time axis to have the quantification processing to generate the corresponding gear shifting strategy, the above APP may create the above gear shifting strategy library based on the generated gear shifting strategy and the above cycling data sample, and save the corresponding relationship between the generated gear shifting strategy and the above cycling data sample in the gear shifting strategy library.

Furthermore, when implemented, the above gear shifting strategy library may also be created by manually analyzing an amount of cycling data samples and gear shifting operation data, besides being created by the above APP based on an amount of cycling data samples and gear shifting operation data. Then, the created gear shifting strategy library may be loaded to the above APP manually.

In the present embodiment, because the above preset gear shifting strategy library is created based on the gear shifting operation data and the cycling data generated during the cycling process of the professional cyclist, it may conduct the ordinary users to shift a gear during the cycling process.

During the cycling process of the ordinary user, the mobile terminal may collect the cycling data of the ordinary user in real time, and compare the collected cycling data with cycling data samples in the above gear shifting strategy library. If the collected cycling data is matched with a cycling data sample in the gear shifting strategy library, the cycling strategy in the gear shifting strategy library corresponding to the cycling data sample may be served as an optimum gear shifting strategy for the ordinary user to output to the user, to prompt the user to perform the gear shifting operation based on the optimum gear shifting strategy.

After the collected cycling data of the ordinary user is compared, as described above, with the cycling data samples in the above gear shifting strategy library, on the one hand, if the cycling data completely matches one of the cycling data samples in the gear shifting strategy library, it indicates that the road currently cycled by the ordinary user completely matches the road corresponding to the cycling data sample. At this time, the above APP may determine that the gear shifting strategy in the gear shifting strategy library corresponding to the cycling data sample is the optimum gear shifting strategy for the ordinary user, to be output to the user.

On the other hand, if the cycling data does not completely match any one of the cycling data samples in the gear shifting strategy library, the above APP may further calculate a similarity between the current cycling data and the cycling data sample in the gear shifting strategy library, to determine the cycling data sample in the gear shifting strategy library which has the highest similarity with the current cycling data. After the cycling data sample which has the highest similarity with the current cycling data is determined, it indicates that the road currently cycled by the ordinary user is a similar road with the road corresponding to the cycling data sample. As this time, the gear shifting strategy in the gear shifting strategy library corresponding to the cycling data sample with the highest similarity may be determined to be the optimum gear shifting strategy for the ordinary user, to output to the user.

When the above APP calculates the similarity between the cycling data and the cycling data sample in the gear shifting data library as described above, errors between respective data in the current cycling data and respective corresponding data in the cycling data sample in the gear shifting data library may be calculated. Then the cycling data sample in the gear shifting strategy library, which has the minimum errors of respective data with corresponding data in the current cycling data, is determined to be the cycling data sample with the highest similarity.

For example, when the cycling data includes data such as a cycling path, road condition information and a cycling speed and the like, after the mobile terminal respectively collects the original data of the cycling path, the road condition information and the cycling speed of the current cycling user by the built-in sensor, the mobile terminal may perform a quantification processing on these collected original data to process them into specific values. Therefore, when the above APP calculates the similarity between the cycling data of the current cycling user and the cycling data sample in the gear shifting data library, it may calculate the error by directly reading respective data having undergone quantification processing by the mobile terminal, and indicate the similarity between the cycling data of the current cycling user and the cycling data sample in the gear shifting data library according to the calculated error.

In the present embodiment, when the above APP determines the cycling strategy in the gear shifting strategy library that corresponds to the cycling data sample as the optimum gear shifting strategy for the ordinary user, to output to the user, the output way is not specifically limited in the present embodiment, which may be output by voice, output by characters, output by the mobile terminal of the user or a vehicle-carried terminal, or output by smart equipment bound with the mobile terminal of the user or the vehicle-carried terminal. For example, it may be output to the user, in a form of characters, by a display screen of the mobile terminal, the vehicle-carried terminal or a smart bracelet or a smart watch bound with the mobile terminal. For example, a character prompt of "the most matched gear shifting combination for the current road condition is XXX" may be directly displayed on the display screen. Furthermore, it may also be output, in the form of voice, by a speaker of the mobile terminal, the vehicle-carried terminal, or the smart bracelet or the smart watch bound with the mobile terminal, or a wired earphone connected with the mobile terminal, or a Bluetooth earphone bounded with the mobile terminal. For example, a voice prompt of "the most matched gear shifting combination for the current road condition is XXX" may be played.

After the above APP outputs the above optimum gear shifting strategy matched in the above gear shifting strategy library to the user, the user may accomplish the gear shifting operation under the prompt of the gear shifting strategy. Therefore, when the user faces different cycling roads, the bicycle may be adjusted to a reasonable speed change ratio according to the prompt output by the above APP.

For example, when an ordinary user rides on different roads, such as on a flat road, on an upslope or on a downslope and the like, if the ordinary user accomplishes the gear shifting operation on his/her own, because the ordinary user lacks professional training, he/she usually cannot accomplish correct gear shifting operations. If the optimum gear shifting strategy is output to the ordinary user by comparing the cycling data of the ordinary user with cycling data samples in the preset gear shifting strategy library, because the gear shifting strategy in the gear shifting strategy library is generated based on the cycling data and gear shifting operation data of the professional cyclists, the ordinary user may perform correct gear shifting operations under the prompt of the output optimum gear shifting strategy when facing different roads, such as the flat road, the upslope and the downslope and the like. It can be seen that the above way has guiding significance to the gear shifting operation during the cycling process of the ordinary user.

In addition, during the cycling process of the user, besides the cycling data such as the above described cycling track, the road condition information and the cycling speed, data such as physiological state data, cycling environment data and gradient track data, etc., of the user may also affect the gear shifting operation of the user. Wherein the above physiological state data may include physiological data such as body temperature and heart rate, and the like, of the user; the above cycling environment data may include environment data such as a wind speed and a wind direction, and the like, during the cycling process; and the above gradient track data may include data such as a total length of a gradient and a length of an upslope or a downslope, etc.

Therefore, when the above APP creates the above gear shifting strategy library based on the amount of cycling data samples and the gear shifting operation data, the data such as the physiological state data, the cycling environment data and the gradient track data, etc., of the user may be introduced to the cycling data to serve as gear shifting adjusting data. The above gear shifting adjusting data is analyzed, such that the generated gear shifting strategy is optimized and adjusted continuously, so when the gear shifting strategy is output to the user, the adjusting strategy with respect to the gear shifting strategy may also be output to the user based on the above gear shifting adjusting data. Wherein the adjusting strategy may be an adjusting suggestion with respect to the output gear shifting strategy.

In the present embodiment, the above physiological state data may include data such as the body temperature and the heart rate, and the like, of the user during the cycling process. The user may wear a heart rate sensor (for example, a hear rate monitor) and a body temperature sensor during the cycling process. The mobile terminal may establish a binding relationship with the heart rate sensor and the body temperature sensor of the user in advance. Therefore, the mobile terminal may acquire the heart rate change and body temperature change of the user during the cycling process in real time through the heart rate sensor and the body temperature sensor.

The above cycling environment data may include data such as a wind speed and a wind direction, and the like, during the cycling process of the user. The user may install a wind speed sensor on the bicycle. The mobile terminal may establish a binding relationship with the wind speed sensor in advance. Therefore, the mobile terminal may acquire the wind speed and wind direction data during the cycling process of the user in real time through the wind speed sensor.

The above gradient track data may include the data such as the total length of the gradient and the length of the upslope or the downslope, etc. During the cycling process of the user, the above APP may calculate the total length of the gradient and the length of the upslope or the downslope ahead during the cycling process of the user in real time by the GPS position information, the altitude change data and gradient change data collected by the mobile terminal in advance.

When the physiological state data such as the heart rate and body temperature of the user is used as the above gear shifting adjusting data, the mobile terminal may learn about the physical state of the user by simply analyzing the acquired heart rate and body temperature of the user. Therefore, physical changes during the cycling process of the user may be monitored in real time. After the above APP compares the current cycling data with cycling data samples in the above gear shifting strategy library to output the corresponding gear shifting strategy to the user, the above APP may further output an adjusting strategy with respect to the gear shifting strategy to the user according to the current physical state of the user.

For example, assuming that the APP provides the optimum gear shifting strategy, for the user from the gear shifting strategy library, being gear 2 of the front wheel and gear 5 of the rear wheel, a piece of voice information of "the most matched gear shifting combination for the current road condition is gear 2 of the front wheel and gear 5 of the rear wheel" may be played to the user through the Bluetooth earphone of the user. If the above APP detects that the current physical energy of the user is in a drained state by analyzing the current heart rate change and body temperature change of the user, a piece of voice information of "the physical energy is drained and it is better to turn down the speed change ratio to save physical strength" may be output to the user through the Bluetooth earphone of the user, to prompt the user to reasonably allocate the physical energy.

When the cycling environment data such as the wind speed and wind direction during the cycling process of the user is used as the above gear shifting adjusting data, the mobile terminal may monitor the wind speed and wind direction changes during the cycling process of the user in real time through the wind speed sensor. After the above APP compares the current cycling data with cycling data samples in the above gear shifting strategy library to output the corresponding gear shifting strategy to the user, the above APP may further output an adjusting strategy with respect to the gear shifting strategy to the user according to the current wind speed and wind direction.

For example, assuming that the APP provides the optimum gear shifting strategy, for the user from the gear shifting strategy library, being gear 2 of the front wheel and gear 5 of the rear wheel, a piece of voice information of "the most matched gear shifting combination for the current road condition is gear 2 of the front wheel and gear 5 of the rear wheel" may be played to the user through the Bluetooth earphone of the user. If the above APP detects that it is a contrary wind and the wind speed is relatively strong currently by the wind speed sensor, a piece of voice information of "it is a contrary wind currently and it is better to turn down the speed change ratio to save physical strength" may be output to the user through the Bluetooth earphone of the user, to prompt the user to reasonably allocate the physical energy.

When the gradient track data such as the total length of the gradient and the length of the upslope or the length of downslope, etc., during the cycling process of the user is used as the above gear shifting adjusting data, the mobile terminal may monitor the gradient ahead of the user during the cycling process of the user. After the above APP compares the current cycling data with cycling data samples in the above gear shifting strategy library to output the corresponding gear shifting strategy to the user, the above APP may further output an adjusting strategy with respect to the gear shifting strategy to the user according to the length of the gradient ahead.

For example, assuming that the APP provides the optimum gear shifting strategy, for the user from the gear shifting strategy library, being gear 2 of the front wheel and gear 5 of the rear wheel, a piece of voice information of "the most matched gear shifting combination for the current road condition is gear 2 of the front wheel and gear 5 of the rear wheel" may be played to the user through the Bluetooth earphone of the user. If the above APP detects that the gradient of the road ahead is relatively long, a piece of voice information of "the gradient of the road ahead is relatively long and it is better to turn down the speed change ratio to save physical strength" may be output to the user through the Bluetooth earphone of the user, to prompt the user to reasonably allocate the physical energy.

Furthermore, besides comprehensively analyzing by the above described APP introducing the physiological state data, the cycling environment data and the gradient track data of the user to the cycling data to continuously optimize and adjust the generated gear shifting strategy, in practice, other types of data which may affect the cycling and gear shifting operation of the user may be introduced as a reference to be comprehensively analyzed, to continuously optimize the output gear shifting strategy, which will not be enumerated one by one in the present embodiment.

In the above present embodiment, cycling data of a user during a cycling process is collected; the collected cycling data is compared with a cycling data sample in a preset gear shifting strategy library, wherein the gear shifting strategy library includes corresponding relationships between preset gear shifting strategies and cycling data samples; and when the collected cycling data matches a cycling data sample in the gear shifting strategy library, the gear shifting strategy corresponding to the cycling data sample is output to the user, to prompt the user to perform a gear shifting operation based on the gear shifting strategy. Therefore, it is achieved that non-professional cycling users may also accomplish correct gear shifting operations in different cycling environments under the prompt of the output gear shifting strategy.

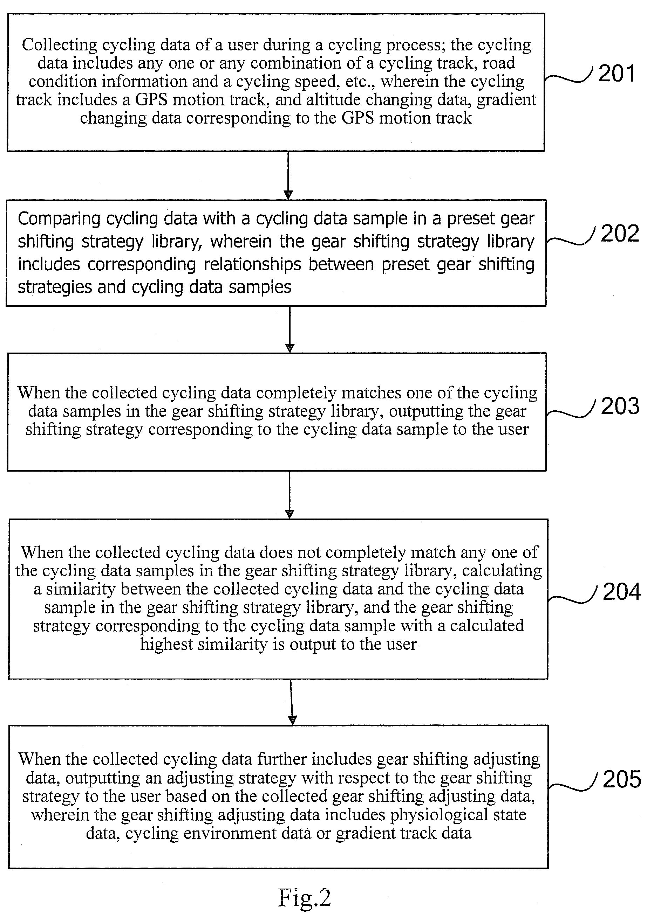

Fig. 2 is a flow chart illustrating a method for prompting gear shifting of a bicycle according to an embodiment, which is applied in a terminal, including the following several steps.

In step 201, cycling data of a user during a cycling process is collected; the cycling data includes any one or any combination of a cycling track, road condition information and a cycling speed, etc., wherein the cycling track includes a GPS motion track, and altitude changing data, gradient changing data corresponding to the GPS motion track.

In step 202, the collected cycling data is compared with a cycling data sample in a preset gear shifting strategy library, wherein the gear shifting strategy library includes corresponding relationships between preset gear shifting strategies and cycling data samples.

In step 203, when the collected cycling data completely matches one of the cycling data samples in the gear shifting strategy library, the gear shifting strategy corresponding to the cycling data sample is output to the user.

In step 204, when the collected cycling data does not completely match any one of the cycling data samples in the gear shifting strategy library, a similarity between the collected cycling data and the cycling data sample in the gear shifting strategy library is calculated, and the gear shifting strategy corresponding to the cycling data sample with a calculated highest similarity is output to the user.

In step 205, when the collected cycling data further includes gear shifting adjusting data, an adjusting strategy with respect to the gear shifting strategy is output to the user based on the collected gear shifting adjusting data, wherein the gear shifting adjusting data includes physiological state data, cycling environment data or gradient track data.

Wherein the technical solution recorded in the above steps 201∼205 may be understood as a gear shifting prompt logic loaded in a preset APP (for example, a cycling APP) installed in the above terminal. The APP may provide a gear shifting prompt service for the user by operating the above gear shifting prompt logic.

The remarks made in paragraphs [0069] to [0112] above in relation to the embodiment of Fig.1 also apply to the embodiment of Fig.2.

Corresponding to the above method embodiments for prompting gear shifting of a bicycle, the present invention also provides device embodiments.

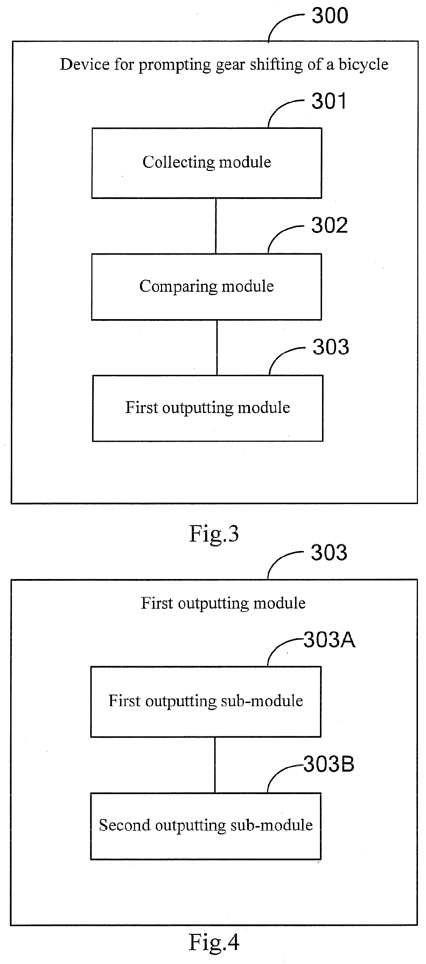

Fig. 3 is a block diagram of a device for prompting gear shifting of a bicycle according to an embodiment.

As shown in Fig. 3, the device 300 for prompting gear shifting of a bicycle according to an embodiment includes: a collecting module 301, a comparing module 302 and a first outputting module 303, wherein
the collecting module 301 is configured to collect cycling data of a user during cycling;
the comparing module 302 is configured to compare the collected cycling data with cycling data samples in a preset gear shifting strategy library, wherein the gear shifting strategy library includes corresponding relationships between preset gear shifting strategies and cycling data samples; and
the first outputting module 303 is configured to, when the collected cycling data matches a cycling data sample in the gear shifting strategy library, output the gear shifting strategy corresponding to the cycling data sample to the user, to prompt the user to perform a gear shifting operation based on the gear shifting strategy.

In the above present embodiment, cycling data of a user during a cycling process is collected; the collected cycling data is compared with a cycling data sample in a preset gear shifting strategy library, wherein the gear shifting strategy library includes corresponding relationships between preset gear shifting strategies and cycling data samples; and when the collected cycling data matches a cycling data sample in the gear shifting strategy library, the gear shifting strategy corresponding to the cycling data sample is output to the user, to prompt the user to perform a gear shifting operation based on the gear shifting strategy. Therefore, it is achieved that non-professional cycling users may also accomplish correct gear shifting operations in different cycling environments under the prompt of the output gear shifting strategy.

Referring to Fig. 4, Fig. 4 is a block diagram of a device for prompting gear shifting of a bicycle according to another embodiment. The embodiment is based on the above embodiment as shown in Fig. 3. The first outputting module 303 may include: a first outputting sub-module 303A and a second outputting sub-module 303B, wherein:
the first outputting sub-module 303A is configured to, when the collected cycling data completely matches one of the cycling data samples in the gear shifting strategy library, output the gear shifting strategy corresponding to the cycling data sample to the user;
the second outputting sub-module 303B is configured to, when the collected cycling data does not completely match any one of the cycling data samples in the gear shifting strategy library, calculate a similarity between the collected cycling data and the cycling data sample in the gear shifting strategy library, and output the gear shifting strategy corresponding to the cycling data sample with a calculated highest similarity to the user.

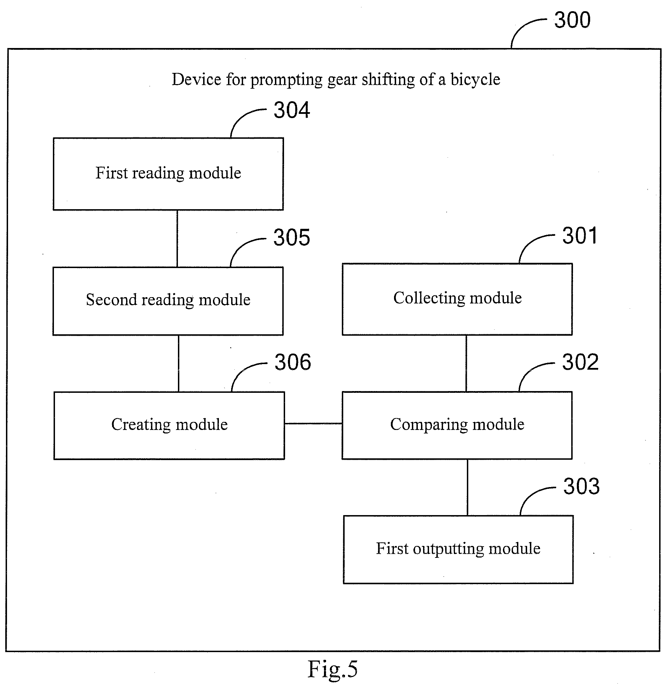

Referring to Fig. 5, Fig. 5 is a block diagram of a device according to another embodiment. The embodiment is based on the above embodiment as shown in Fig. 3. The device 300 may further include: a first reading module 304, a second reading module 305 and a creating module 306, wherein:
the first reading module 304 is configured to read gear shifting operation data of a preset user, wherein the gear shifting operation data includes an occurring time of gear shifting operation and a gear shifting result after the gear shifting operation;
the second reading module 305 is configured to read cycling data of the preset user collected at the occurring time of the gear shifting operation as a cycling data sample; and
the creating module 306 is configured to generate a corresponding gear shifting strategy according to the read gear shifting operation data and the cycling data sample, and create the gear shifting strategy library based on the generated gear shifting strategy and the cycling data sample.

It should be noted that the structures of the first reading module 304, the second reading module 305 and the creating module 306 as shown in the above device embodiment as shown in Fig. 5 may also be included in the above device embodiment as shown in Fig. 4, which is not limited in the present embodiment.

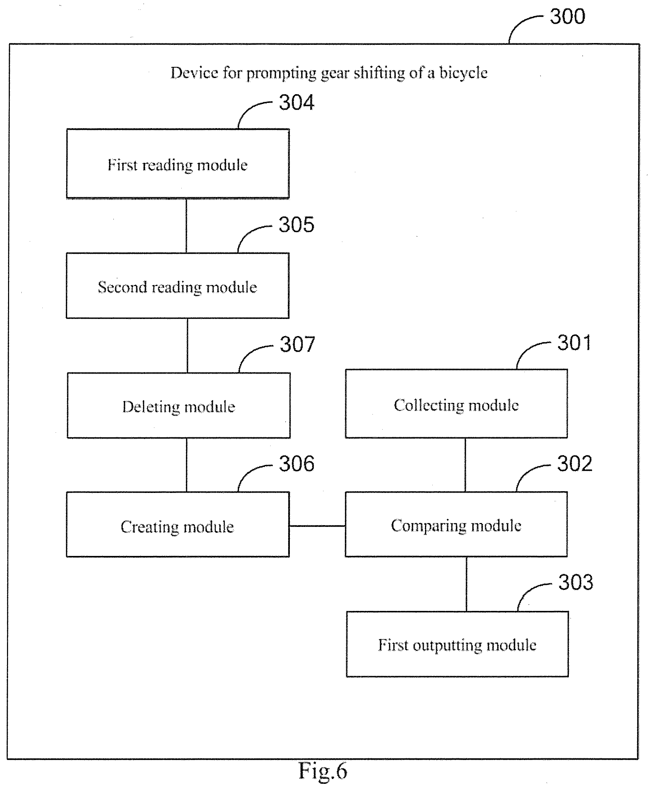

Referring to Fig. 6, Fig. 6 is a block diagram of a device according to another embodiment. The embodiment is based on the above embodiment as shown in Fig. 5. The device 300 may further include: a deleting module 307, wherein:
the deleting module 307 is configured to, before generating the corresponding gear shifting strategy according to the read gear shifting operation data and the cycling data sample, delete an abnormal gear shifting result in the gear shifting operation data.

It should be noted that the structure of the deleting module 307 as shown in the above device embodiment as shown in Fig. 6 may also be included in the above device embodiments as shown in Figs. 3-5, which is not limited in the present embodiment.

In the above respective embodiments, the cycling data includes any one or any combination of a cycling track, road condition information and a cycling speed, etc., wherein the cycling track includes a GPS motion track, and altitude changing data, gradient changing data corresponding to the GPS motion track.

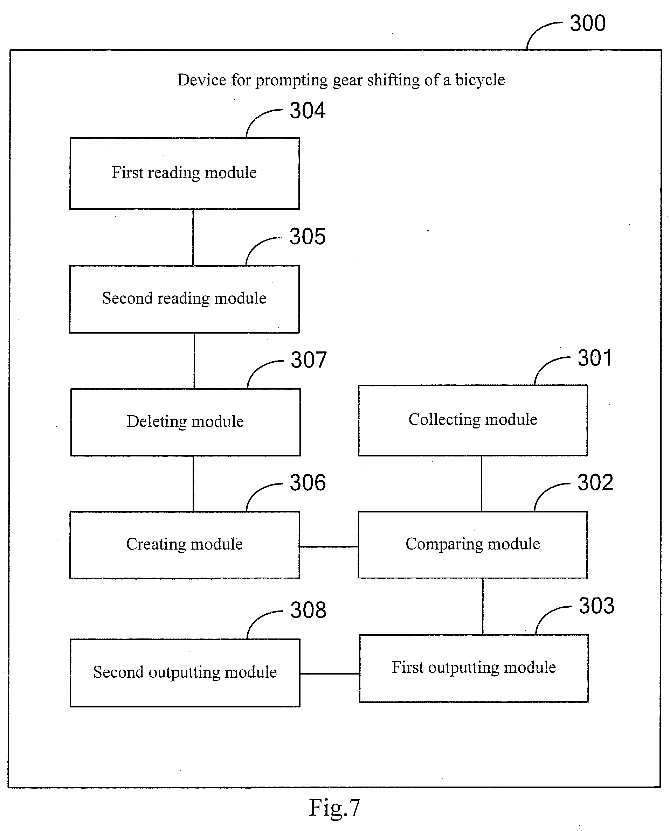

Referring to Fig. 7, Fig. 7 is a block diagram of a device according to another embodiment. The embodiment is based on the above embodiment as shown in Fig. 3. The cycling data further includes gear shifting adjusting data; the gear shifting adjusting data includes physiological state data, cycling environment data or gradient track data; and the device 300 may further include a second outputting module 308, wherein:
the second outputting module 308 is configured to output an adjusting strategy with respect to the gear shifting strategy to the user based on the collected gear shifting adjusting data.

It should be noted that the structure of the second outputting module 308 as shown in the above device embodiment as shown in Fig. 7 may also be included in the above device embodiments as shown in Figs. 4-6, which is not limited in the present embodiment.

Implementation of the functions and operations of the modules in the above devices can be specifically referred to the implementation of the corresponding steps in the above methods, which will not be repeated herein.

For the device embodiments, since they correspond to the method embodiments, they can be referred to the related part of the description of the method embodiments. The device embodiments described above are merely illustrative. The units described as separate may be or may not be physically separate, and the components illustrated as a units may be or may not be physical units, and may be at the same location, or may be distributed to multiple units over a network. A part of or all of the modules can be selected to achieve the objective of the present invention as desired. One skilled in the art can understand and practice the embodiments without paying creative labor.

Correspondingly, the present invention further includes a device for prompting gear shifting of a bicycle, including:
a processor; and
a memory for storing instructions executable by the processor;
wherein the processor is configured to perform:
   collecting cycling data of a user during a cycling process;
   comparing the collected cycling data with cycling data samples in a preset gear shifting strategy library, wherein the gear shifting strategy library includes corresponding relationships between preset gear shifting strategies and cycling data samples; and
   when the collected cycling data matches a cycling data sample in the gear shifting strategy library, outputting the gear shifting strategy corresponding to the cycling data sample to the user, to prompt the user to perform a gear shifting operation based on the gear shifting strategy.

Correspondingly, the present invention further includes a terminal, including:
a processor; and
a memory for storing instructions executable by the processor;
wherein the processor is configured to perform:
   collecting cycling data of a user during a cycling process;
   comparing the collected cycling data with cycling data samples in a preset gear shifting strategy library, wherein the gear shifting strategy library includes corresponding relationships between preset gear shifting strategies and cycling data samples; and
   when the collected cycling data matches a cycling data sample in the gear shifting strategy library, outputting the gear shifting strategy corresponding to the cycling data sample to the user, to prompt the user to perform a gear shifting operation based on the gear shifting strategy.

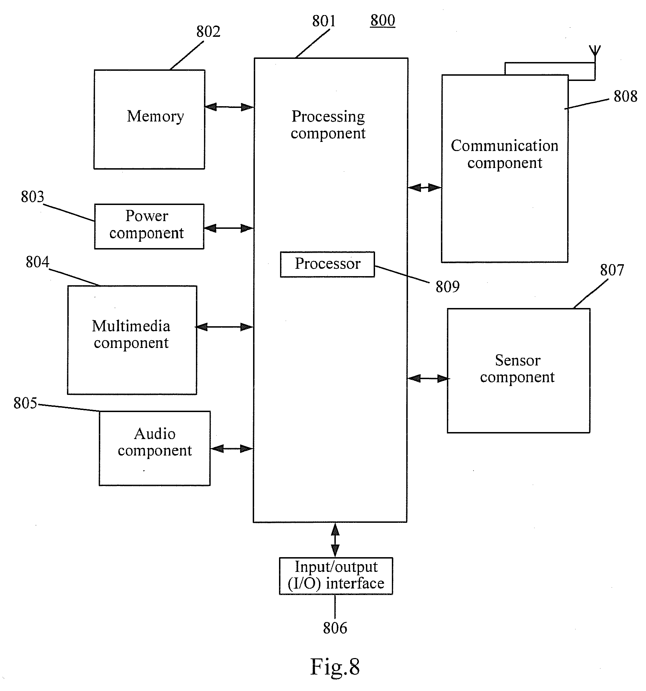

Fig. 8 is a block diagram of a device for prompting gear shifting of a bicycle according to an embodiment.

Fig. 8 is a block diagram of a device 800 according to an embodiment. The device 800 may be the mobile terminal involved in the above embodiments. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 801, a memory 802, a power component 803, a multimedia component 804, an audio component 805, an input/output (I/O) interface 806, a sensor component 807, and a communication component 808.

The processing component 801 typically controls overall operations of the device 800, such as the operations associated with display, telephone calls, data communications, camera operations, and recording operations. The processing component 801 may include one or more processors 809 to execute instructions to perform all or part of the steps in the above described methods. Moreover, the processing component 801 may include one or more modules which facilitate the interaction between the processing component 801 and other components. For instance, the processing component 801 may include a multimedia module to facilitate the interaction between the multimedia component 804 and the processing component 801.

The memory 802 is configured to store various types of data to support the operation of the device 800. Examples of such data include instructions for any applications or methods operated on the device 800, contact data, phonebook data, messages, pictures, video, etc. The memory 802 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 803 provides power to various components of the device 800. The power component 803 may include a power management system, one or more power sources, and any other components associated with the generation, management, and distribution of power in the device 800.

The multimedia component 804 includes a screen providing an output interface between the device 800 and the user. In embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In embodiments, the multimedia component 804 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 805 is configured to output and/or input audio signals. For example, the audio component 805 may include a microphone ("MIC") configured to receive an external audio signal when the device 800 is in an operation mode, such as a call mode, a recording mode, and a voice recognition mode. The received audio signal may be further stored in the memory 802 or transmitted via the communication component 808. In certain embodiments, the audio component 805 further includes a speaker to output audio signals.

The I/O interface 806 provides an interface between the processing component 801 and peripheral interface modules, such as a keyboard, a click wheel, buttons, and the like. The buttons may include, but are not limited to, a home button, a volume button, a starting button, and a locking button.

The sensor component 807 includes one or more sensors to provide state assessments of various aspects of the device 800. For instance, the sensor component 807 may detect an open/closed state of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 807 may include a proximity sensor configured to detect the presence of nearby objects without any physical contact. The sensor component 807 may further include a light sensor, such as a CMOS or CCD image sensor, for use in imaging applications. In embodiments, the sensor component 807 may further include an accelerometer sensor, a gyroscope sensor, a magnetic sensor, a pressure sensor or a temperature sensor.

The communication component 808 is configured to facilitate communication, wired or wirelessly, between the device 800 and other devices. The device 800 may access a wireless network based on a communication standard, such as WiFi, 2G, or 3G, or a combination thereof. In one embodiment, the communication component 808 receives a broadcast signal or broadcast associated information from an external broadcast management system via a broadcast channel. In one embodiment, the communication component 808 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In certain embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method.

In certain embodiments, there is further provided a non-transitory computer-readable storage medium including instructions, such as included in the memory 802, executable by the processor 809 in the device 800, for performing the above-described methods. For example, the non-transitory computer-readable storage medium may be a ROM, a RAM, a CD-ROM, a magnetic tape, a floppy disc, an optical data storage device, and the like.

When instructions in the above-mentioned storage medium are executed by a processor of a mobile terminal, the mobile terminal is caused to perform a method for prompting gear shifting of a bicycle, including:
collecting cycling data of a user during a cycling process;
comparing the collected cycling data with cycling data samples in a preset gear shifting strategy library, wherein the gear shifting strategy library includes corresponding relationships between preset gear shifting strategies and cycling data samples; and
when the collected cycling data matches a cycling data sample in the gear shifting strategy library, outputting the gear shifting strategy corresponding to the cycling data sample to the user, to prompt the user to perform a gear shifting operation based on the gear shifting strategy.

## Claims

1. A method for prompting gear shifting of a bicycle, applied in a mobile terminal, comprising:
collecting (101) cycling data of a user during a cycling process;
comparing (102) the collected cycling data with cycling data samples in a preset gear shifting strategy library, wherein the gear shifting strategy library comprises corresponding relationships between preset gear shifting strategies and cycling data samples; and
when the collected cycling data matches a cycling data sample in the gear shifting strategy library, outputting (103) the gear shifting strategy corresponding to the cycling data sample to the user, to prompt the user to perform a gear shifting operation based on the gear shifting strategy.

2. The method of claim 1, wherein the cycling data comprises any one or any combination of a cycling track, road condition information and a cycling speed, wherein the cycling track comprises a GPS motion track, and altitude changing data, gradient changing data corresponding to the GPS motion track.

3. The method of claim 1, wherein when the collected cycling data matches a cycling data sample in the gear shifting strategy library, outputting (103) the gear shifting strategy corresponding to the cycling data sample to the user comprises:
when the collected cycling data completely matches one of the cycling data samples in the gear shifting strategy library, outputting (203) the gear shifting strategy corresponding to the cycling data sample to the user; and
when the collected cycling data does not completely match any one of the cycling data samples in the gear shifting strategy library, calculating (204) a similarity between the collected cycling data and the cycling data sample in the gear shifting strategy library, and outputting the gear shifting strategy corresponding to the cycling data sample with a calculated highest similarity to the user.

4. The method of claim 2, further comprising:
reading gear shifting operation data of a preset user, wherein the gear shifting operation data comprises an occurring time of the gear shifting operation and a gear shifting result after the gear shifting operation;
reading cycling data of the preset user collected at the occurring time of the gear shifting operation as a cycling data sample; and
generating a corresponding gear shifting strategy according to the read gear shifting operation data and the cycling data sample, and creating the gear shifting strategy library based on the generated gear shifting strategy and the cycling data sample.

5. The method of claim 4, further comprising:
before generating the corresponding gear shifting strategy according to the read gear shifting operation data and the cycling data sample, deleting an abnormal gear shifting result in the gear shifting operation data.

6. The method of claim 2, wherein the cycling data further comprises gear shifting adjusting data; the gear shifting adjusting data comprises physiological state data, cycling environment data or gradient track data; and
the method further comprises:
outputting an adjusting strategy with respect to the gear shifting strategy to the user based on the collected gear shifting adjusting data.

7. A device for prompting gear shifting of a bicycle, comprising:
a collecting module (301) configured to collect cycling data of a user during cycling;
a comparing module (302) configured to compare the collected cycling data with cycling data samples in a preset gear shifting strategy library, wherein the gear shifting strategy library comprises corresponding relationships between preset gear shifting strategies and cycling data samples; and
a first outputting module (303) configured to, when the collected cycling data matches a cycling data sample in the gear shifting strategy library, output the gear shifting strategy corresponding to the cycling data sample to the user, to prompt the user to perform a gear shifting operation based on the gear shifting strategy.

8. The device of claim 7, wherein the cycling data comprises any one or any combination of a cycling track, road condition information and a cycling speed, wherein the cycling track comprises a GPS motion track, and altitude changing data, gradient changing data corresponding to the GPS motion track.

9. The device of claim 8, wherein the first outputting module (303) comprises:
a first outputting sub-module (303A) configured to, when the collected cycling data completely matches one of the cycling data samples in the gear shifting strategy library, output the gear shifting strategy corresponding to the cycling data sample to the user;
a second outputting sub-module (303B) configured to, when the collected cycling data does not completely match any one of the cycling data samples in the gear shifting strategy library, calculate a similarity between the collected cycling data and the cycling data sample in the gear shifting strategy library, and output the gear shifting strategy corresponding to the cycling data sample with a calculated highest similarity to the user.

10. The device of claim 8, further comprising:
a first reading module (304) configured to read gear shifting operation data of a preset user, wherein the gear shifting operation data comprises an occurring time of the gear shifting operation and a gear shifting result after the gear shifting operation;
a second reading module (305) configured to read cycling data of the preset user collected at the occurring time of the gear shifting operation as a cycling data sample; and
a creating module (306) configured to generate a corresponding gear shifting strategy according to the read gear shifting operation data and the cycling data sample, and create the gear shifting strategy library based on the generated gear shifting strategy and the cycling data sample.

11. The device of claim 10, further comprising:
a deleting module (307) configured to, before generating the corresponding gear shifting strategy according to the read gear shifting operation data and the cycling data sample, delete an abnormal gear shifting result in the gear shifting operation data.

12. The device of claim 8, wherein the cycling data further comprises gear shifting adjusting data; the gear shifting adjusting data comprises physiological state data, cycling environment data or gradient track data; and
the device further comprises:
a second outputting module (308) configured to output an adjusting strategy with respect to the gear shifting strategy to the user based on the collected gear shifting adjusting data.

13. A device for prompting gear shifting of a bicycle, comprising:
a processor (809); and
a memory (802) for storing instructions executable by the processor (809);
wherein the processor (809) is configured to perform:
collecting cycling data of a user during a cycling process;
comparing the collected cycling data with cycling data samples in a preset gear shifting strategy library, wherein the gear shifting strategy library comprises corresponding relationships between preset gear shifting strategies and cycling data samples; and
when the collected cycling data matches a cycling data sample in the gear shifting strategy library, outputting the gear shifting strategy corresponding to the cycling data sample to the user, to prompt the user to perform a gear shifting operation based on the gear shifting strategy.

14. A computer program, which, when executing on a processor of a mobile terminal for prompting gear shifting of a bicycle, performs a method according to any one of claims 1-6.
